Europäisches Patentamt

European Patent Office

Office européen des brevets

(19)

(11) Veröffentlichungsnummer: **0 261 466
B1**

# (12) EUROPÄISCHE PATENTSCHRIFT

(45) Veröffentlichungstag der Patentschrift:
**25.07.90**

(51) Int. Cl.⁵: **B65D 81/32**

(21) Anmeldenummer: **87112847.6**

(22) Anmeldetag: **03.09.87**

(54) **Doppel-Austragkartusche für Zweikomponentenmassen.**

(30) Priorität: **14.09.86  CH 3680/86**

(43) Veröffentlichungstag der Anmeldung:
**30.03.88 Patentblatt 88/13**

(45) Bekanntmachung des Hinweises auf die Patenterteilung:
**25.07.90 Patentblatt 90/30**

(84) Benannte Vertragsstaaten:
**CH DE ES FR GB IT LI NL SE**

(56) Entgegenhaltungen:
**EP-A- 0 124 852
US-A- 3 323 682
US-A- 4 040 420**

(73) Patentinhaber: **Keller, Wilhelm A., Riedstrasse 1,
CH-6330 Cham(CH)**

(72) Erfinder: **Keller, Wilhelm A., Riedstrasse 1,
CH-6330 Cham(CH)**

(74) Vertreter: **Kägi, Otto, Patentanwalt
Hinterbergstrasse 36 Postfach, CH-6330 Cham(CH)**

ACTORUM AG

## Beschreibung

Die Erfindung betrifft eine Doppel-Austragkartusche für Zweikomponentenmassen, mit zwei parallelachsig nebeneinander angeordneten Vorratszylindern und einem stirnseitigen, beiden Zylindern gemeinsamen und diese einstückig verbindenden Mündungsteil, welcher zwei je von einem Zylinderraum ausgehende, axiale Austragkanäle enthält.

Solche üblicherweise aus Kunststoff im Spritzgiessverfahren hergestellte Doppelkartuschen werden zum Lagern und zum Vertrieb von zwei zusammengehörigen Stoffkomponenten verwendet, die bei der Verarbeitung gemischt werden und miteinander chemisch reagieren, wobei das Gemisch sich verfestigt bzw. aushärtet. Beispiele solcher Zweikomponentenmassen sind Kleber, Fugendichtmassen, Dental-Abdruckmassen usw. Das Austragen der beiden Komponenten durch den Mündungsteil bei der Verarbeitung erfolgt durch Betätigung eines in jedem Vorratszylinder vorhandenen Förderkolbens, wobei in der Regel ein Durchlaufmischer an die Kartuschenmündung angeschlossen ist. Wegen der hohen Viskosität der Massen und dem Strömungswiderstand des Mischers müssen dabei erhebliche Kräfte auf die Kolben ausgeübt werden, und es entstehen entsprechend hohe Drücke in den Zylindern.

Da von der Abfüllung der Komponenten in die Kartusche bis zur Verarbeitung längere Zeit vergeht, typischerweise mehrere Monate bis zu einem Jahr, besteht bei bekannten Doppelkartuschen der genannten Art das Problem, dass Bestandteile der einen oder beider Stoffkomponenten durch die dünnen Kunststoffwände hindurch diffundieren und die Reaktion vorzeitig, d.h. bereits während der Lagerung einsetzt. Die damit verbundene Aushärtung oder jedenfalls Verdickung oder "Knollenbildung" ist besonders im gemeinsamen Mündungsbereich störend, weil dadurch häufig das Austragen und Verarbeiten unmöglich und der ganze Kartuscheninhalt somit wertlos werden. Natürlich kann man, wie ebenfalls bekannt, die beiden Komponenten in getrennte (also nicht einstückig verbundene) Einzel-Kartuschen bzw. -Zylinder abfüllen, die erst bei der Verarbeitung am Mischer zusammengefügt werden. Bei solcher mehrteiliger Herstellung entstehen jedoch stark erhöhte Form- und Montagekosten. Die Handhabung (Abfüllen, Vertrieb, Lagerung, Verwendung) der Einzelkartuschen wird kompliziert, und schliesslich sind auch Verwechslungen beim Verarbeiten nicht auszuschliessen, indem versehentlich nicht zusammengehörige oder zwei gleiche (nicht reagierende) Komponenten zusammengebracht werden.

Die Aufgabe der Erfindung besteht darin, bei einstückig aus Kunststoff hergestellten Doppel-Austragkartuschen, unter Beibehaltung ihrer Vorteile bei Herstellung, Handhabung und Gebrauch, eine vorzeitige Reaktion der Komponenten in der Kartusche zu verhindern bzw. eine erheblich verlängerte Lagerdauer zu ermöglichen.

Die Lösung dieser Aufgabe besteht erfindungsgemäss darin, dass die beiden Austragkanäle durch zwei von getrennten Zylinderwänden ausgehende und bis zum Kanalende doppelt geführte Wandabschnitte getrennt sind und einen separaten, axial von aussen eingesetzten Verschlussteil aufnehmen.

Indem bei dieser Gestaltung die "Kriechwege" im Kunststoffmaterial enorm verlängert werden - einerseits durch die doppelwandige Trennung der Austragkanäle und anderseits durch den eingesetzten Verschlussteil - wird die schädliche Diffusion zwischen den eingelagerten Komponenten praktisch vollständig unterbunden. Ein weiterer Vorteil ergibt sich daraus, dass die für das Einsetzen des Verschlussteils notwendigerweise offenen, axialen Kanäle beim Spritzgiessen das einwandfreie Abstützen und Zentrieren der Zylinderformkerne ermöglichen, was wiederum gleichmässige Zylinder-Wanddicken gewährleistet.

Verschiedene Varianten der im Patentanspruch 1 definierten Erfindung sind in den weiteren Ansprüchen 2 bis 14 angegeben. So beziehen sich die Ansprüche 2 bis 4 sowie 12 auf verschiedene Ausgestaltungen des Mündungsteils und Anspruch 5 auf den Verschlussteil. Gemäss Anspruch 6 bildet der letztere für die Dauer der Lagerung der gefüllten Kartuschen einen Verschluss, der jedoch vor dem Austragen, d.h. vor der Verarbeitung des Kartuscheninhalts zu entfernen ist. Bei Gestaltung nach Anspruch 7 dagegen verbleibt der Verschlussteil in der Kartuschenmündung und ist Bestandteil eines Schieberverschlusses, welcher zum Austragen geöffnet und ggf. wieder geschlossen werden kann; die Ansprüche 8 bis 11 sowie 13 und 14 betreffen die zweckmässige Gestaltung eines solchen Verschlusses bzw. eines zugehörigen Schieberorgans.

Nachfolgend werden verschiedene Ausführungsbeispiele der erfindungsgemässen Doppel-Austragkartusche im Zusammenhang mit der Zeichnung beschrieben.

Fig. 1 zeigt eine erste Ausführungsform im Längsschnitt,

Fig. 2 ist die Stirnansicht der Doppelkartusche nach Fig. 1, wobei der Verschlussteil strichpunktiert angedeutet ist,

Fig. 3 zeigt dieselbe Doppelkartusche in Seitenansicht (Zylinder teilweise weggebrochen), nach Entfernen des Verschlussteils und mit angeschlossenem, im Schnitt gezeichnetem Durchlaufmischer,

Fig. 4 zeigt die Kopfpartie eines weiteren Ausführungsbeispiels mit drehbarem, geschlossenem Schieberverschluss im Längsschnitt,

Fig. 5 ist ein Schnitt entlang der Linie V-V in Fig. 4 und

Fig. 6 ein Schnitt entlang der Linie VI-VI in Fig. 4 (Schieberorgan weggelassen),

Fig. 7 ist ein Schnitt analog der Fig. 4, jedoch bei geöffnetem Verschluss und mit angeschlossenem Durchlaufmischer, und

Fig. 8 ist ein Schnitt entlang der Linie VIII-VIII in Fig. 7.

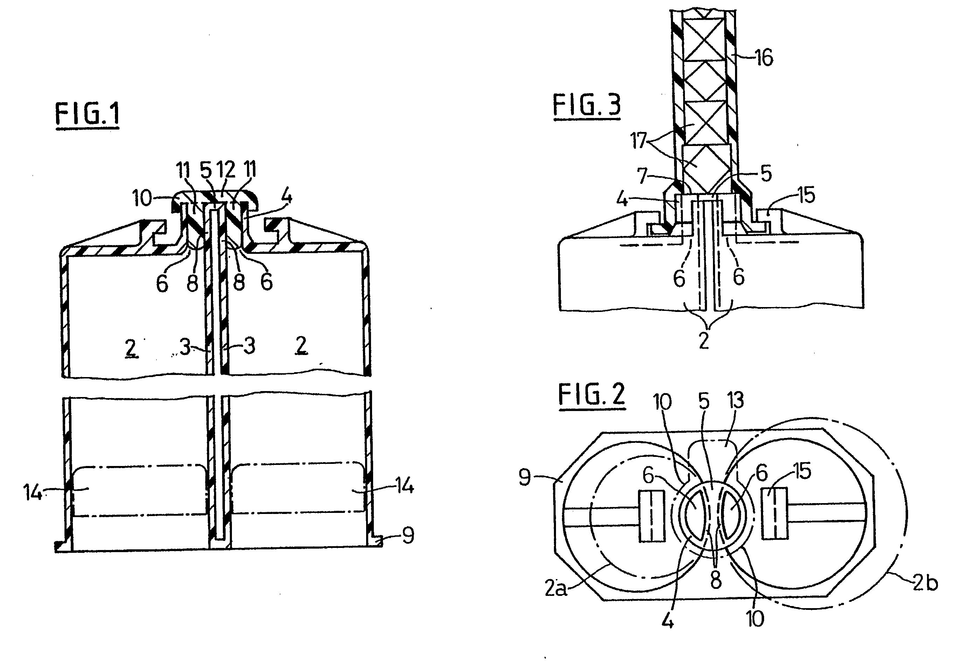

Die Doppel-Austragkartusche nach Fig. 1 bis 3 weist zwei Vorratszylinder 2 mit den Zylinderwänden 3 auf, die zusammen mit einem gemeinsamen Mündungsteil 4 einstückig als Spritzgussteil aus Kunststoff hergestellt sind. Die beiden Zylinder 2 enthalten je einen (strichpunktiert angedeuteten) Förderkolben 14 und können am hinteren Ende durch einen Flansch 9 verbunden sein. Von jedem der mit parallelen Achsen nebeneinander angeordneten Zylinder 2 geht ein Austragkanal 6 aus, welcher sich axial durch den Mündungsteil 4 hindurch erstreckt. Innerhalb des Mündungsteils 4 sind die Austragkanäle 6 vollständig doppelwandig getrennt durch zwei Wandabschnitte 8, welche von den getrennten Zylinderwänden 3 ausgehen; vorzugsweise ist wenigstens die Innenseite der Wandabschnitte 8 zylindrisch und setzt die Innenfläche jedes Zylinders 2 stetig fort, wie aus Fig. 2 ersichtlich ist. Nur am vorderen Ende der Austragkanäle 6 sind die Wandabschnitte 8 durchinen ebenen Steg 5 verbunden, welcher (zusammen mit dem Stirnrand des Mündungsteils 4) eine Stirnebene 7 des Mündungsteils 4 definiert.

Ein separater, axial von aussen in den Mündungsteil 4 eingesetzter Verschlussteil 10, vorzugsweise aus Weichplastik oder Kautschuk hergestellt, weist zwei Ansätze 11 auf, welche je dem Querschnitt eines Austragkanals 6 angepasst sind. Die beiden Ansätze 11 sind durch einen Flansch 12 verbunden, dessen Rand die Stirnkante des Mündungsteils 4 überragt. Der Flansch 12 ist ausserdem mit einem Grifflappen 13 versehen (Fig. 2), um das Entfernen des Verschlussteils 10 aus dem Mündungsteil zu erleichtern.

Bei der Doppelkartusche nach Fig. 1 mit eingesetztem Verschlussteil 10 ist eine Lagerung mit eingefüllten Komponenten während langer Zeit möglich, ohne dass eine unerwünschte, vorzeitige Reaktion infolge Diffusion durch das Kunststoffmaterial der Kartusche hindurch eintritt. Da auch im Mündungsteil die Kanäle 6 doppelwandig getrennt sind und eine Materialverbindung ausschliesslich stirnseitig über den Steg 5 besteht, ausserdem aber der Verschlussteil 10 mit den Ansätzen 11 die eingefüllten Komponenten von den Kanälen 6 fernhält, besteht ein extrem langer "Kriechweg" im Kunststoffmaterial zwischen den beiden Zylinderräumen, welcher eine Diffusion praktisch verhindert. Dennoch ist die Doppelkartusche samt Mündungsteil als einstückiges Kunststoff-Spritzgussteil hergestellt. Die vorne offenen, axialen Austragkanäle ermöglichen es, in der Spritzgiessform die Kerne für die Zylinderräume einwandfrei zu zentrieren. Dadurch können gleichmässige Wandstärken bei den Zylinderwänden 3 eingehalten werden, wodurch die erforderliche Festigkeit und Formbeständigkeit gegenüber auftretenden Innendrücken auch mit relativ dünnen Wänden erreicht wird.

Mit nur geringfügigen Anpassungen am Mündungsteil können in gleicher Weise auch Doppelkartuschen mit ungleichen Zylindern 2a und 2b (in Fig. 2 strichpunktiert angedeutet) hergestellt werden für Zweikomponenten-Systeme, deren Komponenten nicht zu gleichen Teilen gemischt werden sollen.

Die Doppelkartusche nach Fig. 1 bis 3 weist in an sich bekannter Weise stirnseitig einen Bajonettsockel 15 für die Befestigung eines Durchlaufmischers 16 (Fig. 3) auf, und der Mündungsteil ist zum dichten Anschliessen eines solchen Mischers ausgebildet. Bei der Inbetriebnahme der Kartusche zum Austragen und Verarbeiten der Zweikomponentenmasse muss zunächst der Verschlussteil 10 aus der Mündung entfernt werden, worauf der Mischer 16 angeschlossen wird. Dabei wird einerseits eine Innenschulter des Mischerrohres gegen die Stirnkante und anderseits das erste der schematisch dargestellten Mischelemente 17 mit seiner Eintrittskante gegen den Steg 5 des Mündungsteils gepresst.

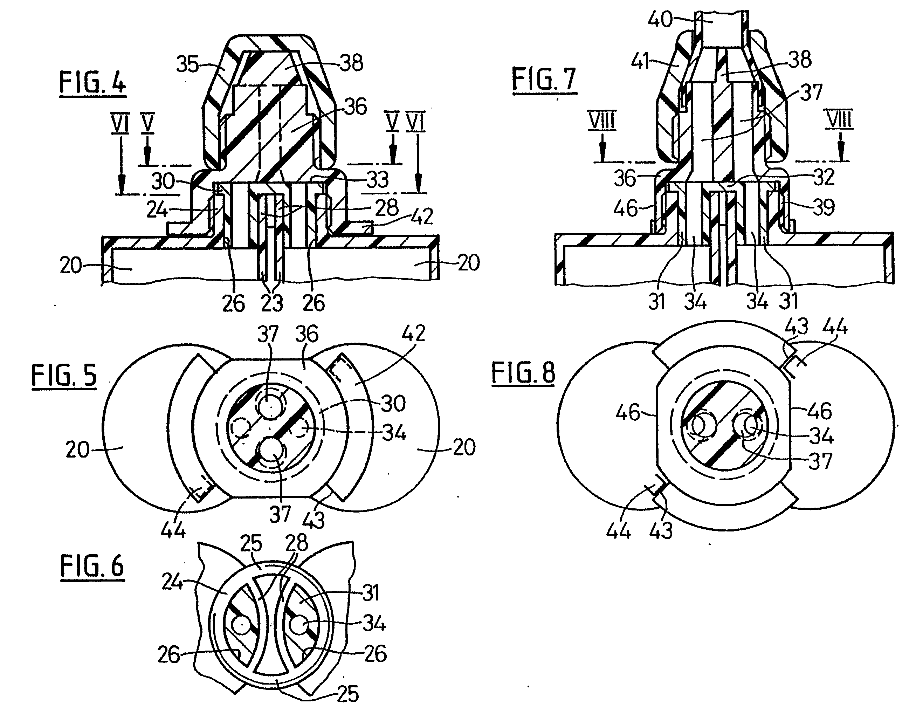

Die beiden Zylinder 20 der einstückig hergestellten Doppelkartusche nach Fig. 4 bis 8 weisen ebenfalls getrennte Zylinderwände 23 sowie, ausgehend von jedem Zylinderraum, axial durch den gemeinsamen Mündungsteil 24 verlaufende Austragkanäle 26 auf. Die stirnseitig offenen Kanäle 26 sind wiederum durch Wandabschnitte 28, welche von den Zylinderwänden 23 ausgehen, bis zum Ende der Kanäle doppelwandig getrennt. Im Gegensatz zum vorangehenden Ausführungsbeispiel fehlt hier ein stirnseitiger Verbindungssteg zwischen den Wandabschnitten 28, doch ist im Bereich des Mündungsteils 24 eine einstückige Verbindung zwischen beiden Zylindern 20 durch Abschnitte 25 eines geschlossenen Ringes gegeben, welcher an den Stirnseiten beider Vorratszylinder angeformt ist und beide Austragkanäle 26 umfasst.

Der axial von aussen eingesetzte Verschlussteil 30 weist auch hier zwei dem Querschnitt der Austragkanäle 26 angepasste Ansätze 31 auf, die durch einen über der Stirnseite des Mündungsteils liegenden Flansch 32 verbunden sind. Bei diesem Beispiel jedoch enthält jeder Ansatz 31 eine Längsbohrung 34, die auch den Flansch 32 durchdringt. Die Aussenfläche 33 des Flansches ist als Dichtfläche ausgebildet und zum Zusammenwirken mit einem am Mündungsteil 24 mittels Feingewinde 39 drehbar geführten Schieberorgan 36 bestimmt. Somit ist hier der Verschlussteil 30 für den Materialaustrag nicht aus dem Mündungsteil zu entfernen, sondern er verbleibt als Bestandteil eines weiter unten beschriebenen Schieberverschlusses, welcher geöffnet und geschlossen werden kann.

Die wesentlichen Vorteile bezüglich einstückiger Herstellung der Doppelkartusche und insbesondere der Diffusionshemmung sind auch bei dieser Variante gegeben. Die in die Zylinder eingefüllten Materialkomponenten füllen zwar normalerweise die Längsbohrungen 34 im Verschlussteil bis zur Dichtfläche 33 aus. Eine Diffusion des Inhalts ist jedoch wegen dem Materialübergang von den Ansätzen 31 auf den Ring 24 oder die Wandabschnitte 28 erschwert (Fig. 6) und innerhalb des Ringes nur über die Abschnitte 25 möglich. Als Variante wäre es auch möglich, den zylinderseitigen Eingang der Bohrungen 34 durch ein dünnes, am Verschlussteil angeformtes Häutchen oder eine Folie (nicht dargestellt) zunächst zu verschliessen und so den Kartuscheninhalt während der Lagerung von den Bohrungen 34 fernzuhalten; bei beginnendem Austrag werden diese Verschlusshäutchen durch den Zylinder-Innendruck zum Platzen gebracht und die Bohrungen dadurch freigegeben.

Das Schieberorgan 36 weist ebenfalls zwei Längsbohrungen 37 auf, welche an die Dichtfläche 33 des Verschlussteils anschliessen. Die den Mündungsteil und den Verschlussteil 30 übergreifende Kappe des Schieberorgans 36 weist seitliche Schlüsselflächen 46 und einen Flansch 42 auf, von welchem zwei gegenüberliegende Sektoren von je 90° ausgeschnitten sind.

Die Fig. 4 und 5 zeigen den Verschluss in der Schliess stellung, in welcher die Längsbohrungen 37 des drehbaren Schieberorgans 36 zu den Längsbohrungen 34 des Verschlussteils 30 versetzt sind (Fig. 5). Mit dieser Verschlussstellung gelangen die gefüllten Doppelkartuschen zur Verteilung und werden bis zur Verwendung gelagert; der vordere Teil des Schieberorgans kann dabei mittels einer Kappe 35 geschützt sein. Das Feingewinde 39 zwischen Mündungsteil 24 und Schieberorgan 36 ist zweckmässigerweise schwergängig ausgebildet, und das Schieberorgan ist noch nicht vollständig bis zum Anschlag festgezogen, jedoch so weit, dass es auf die Dichtfläche 33 eine zur Abdichtung der Bohrungen 34 ausreichende Pressung ausübt.

Zwecks Austrag und Verarbeitung des Kartuscheninhalts wird das Schieberorgan 36 um 90° in die Oeffnungsstellung gemäss Fig. 7 und 8 weitergedreht. Hierbei wird der Flansch 32 entsprechend einem Viertel der Gewindesteigung zusätzlich zusammengepresst, was im Hinblick auf den beim Austragen auftretenden hohen Innendruck erwünscht ist. Zur genauen Festlegung der Oeffnungsstellung, in welcher die Bohrungen 37 mit den Bohrungen 34 kommunizieren sollen, werden zweckmässigerweise Drehanschläge für das Schieberorgan 36 vorgesehen. Im vorliegenden Fall werden solche Anschläge durch radiale Anschlagkanten 43 am Flansch 42 und von den Zylindern 20 stirnseitig abstehende Nocken 44 gebildet. Sofern nicht der gesamte Kartuscheninhalt auf einmal verarbeitet wird, kann der Verschluss mehrmals geöffnet und wieder geschlossen werden; gegebenenfalls können auch für die Schliessstellung entsprechende Drehanschläge (nicht dargestellt) vorgesehen werden.

Das Schieberorgan 36 ist an seinem Vorderteil zum Anschluss eines Durchlaufmischers 40 ausgebildet. Dieser wird nach Entfernen der Schutzkappe 35 aufgesetzt und mittels einer Ueberwurfmutter 41 am Schieberorgan 36 festgezogen. Eine in axialer Richtung über das Ende der Bohrungen 37 vorstehende Trennwand 38 des Schieberorgans sorgt für getrennte Weiterleitung der beiden Komponenten bis zum Uebergang auf die Mischorgane des Mischers 40 (nicht dargestellt).

Bei der Ausgestaltung des Mündungsteils und des Verschlussteils (mit oder ohne Drehverschluss) sind natürlich mancherlei Varianten möglich. So kann es bei der Ausführung gemäss Fig. 1 bis 3 erwünscht sein, den Mündungsteil durch angeformte, einen geschlossenen zylindrischen Mündungsring bildende Ringabschnitte entsprechend den Abschnitten 25 nach Fig. 6 zu verstärken. Ausserdem ist die Verwendung eines vor dem Austrag zu entfernenden Verschlussteils oder eines längsdurchbohrten Verschlussteils in Verbindung mit einem Schieberorgan nicht an die jeweilige Gestaltung des Mündungsteils gebunden. Ebenso kann eine drehbare Verbindung zwischen Mündungsteil und Schieberorgan auf andere Weise als durch Gewinde verwirklicht sein.

Schliesslich ist es auch ohne weiteres denkbar, die erfindungsgemässen Massnahmen zur Diffusionshemmung und Merkmale des Verschlusses sinngemäss auf Dreifach- oder gar MehrfachAustragkartuschen (für drei oder mehr Komponenten) anzuwenden, sofern solche Systeme künftig eingeführt werden sollten.

## Patentansprüche

1. Doppel-Austragkartusche für Zweikomponentenmassen, mit zwei parallelachsig nebeneinander angeordneten Vorratszylindern (2, 20) und einem stirnseitigen, beiden Zylindern gemeinsamen und diese einstückig verbindenden Mündungsteil (4, 24), welcher zwei je von einem Zylinderraum ausgehende, axiale Austragkanäle (6, 26) enthält, dadurch gekennzeichnet, dass die beiden Austragkanäle durch zwei von getrennten Zylinderwänden (3, 23) ausgehende und bis zum Kanalende doppelt geführte Wandabschnitte (8, 28) getrennt sind und einen separaten, axial von aussen eingesetzten Verschlussteil (10, 30) aufnehmen.

2. Doppel-Austragkartusche nach Anspruch 1, dadurch gekennzeichnet, dass die beiden Wandabschnitte (8) am Kanalende durch einen ebenen, eine Stirnebene (7) des Mündungsteils (4) definierenden Steg (5) verbunden sind.

3. Doppel-Austragkartusche nach Anspruch 1 oder 2, dadurch gekennzeichnet, dass die beiden Wandabschnitte (28) durch Abschnitte (25) eines Ringes (24) verbunden sind, welcher an den Stirnseiten beider Vorratszylinder (20) angeformt ist und beide Austragkanäle umfasst.

4. Doppel-Austragkartusche nach Anspruch 1, dadurch gekennzeichnet, dass die Innenseiten der Wandabschnitte (8, 28) zylindrisch sind und jeweils die Innenfläche eines Vorratszylinders (2, 20) stetig fortsetzen.

5. Doppel-Austragkartusche nach Anspruch 1, dadurch gekennzeichnet, dass der Verschlussteil (10, 30) zwei je dem Querschnitt eines Austragkanals (6, 26) angepasste, durch einen Flansch (12, 32) verbundene Ansätze (11, 31) aufweist.

6. Doppel-Austragkartusche nach Anspruch 1 oder 5, dadurch gekennzeichnet, dass der Verschlussteil (10) einen vor dem Austragen der Zweikomponentenmassen aus den Austragkanälen zu entfernenden Verschluss bildet.

7. Doppel-Austragkartusche nach Anspruch 5, dadurch gekennzeichnet, dass jeder Ansatz (31) eine auch den Flansch (32) durchdringende Längsbohrung (34) aufweist und dass die Aussenfläche (33) des Flansches eine zum Zusammenwirken mit einem am Mündungsteil (24) drehbar geführten Schieberorgan (36) bestimmte Dichtfläche bildet.

8. Doppel-Austragkartusche nach Anspruch 7, dadurch gekennzeichnet, dass das Schieberorgan (36) zwei Längsbohrungen (37) enthält und wahlweise in eine Oeffnungsstellung oder eine Schliessstellung drehbar ist, in welchen die genannten Längsbohrungen (37) mit denjenigen (34) des Verschlussteils (30) kommunizieren bzw. gegen diese versetzt sind.

9. Doppel-Austragkartusche nach Anspruch 8, dadurch gekennzeichnet, dass Mündungsteil (24) und Schieberorgan (36) durch ein Feingewinde (39) verbunden sind und den Flansch (32) des Verschlussteils (30) mit in Schliess- und Oeffnungsstellung unterschiedlicher axialer Pressung beaufschlagen.

10. Doppel-Austragkartusche nach Anspruch 8, dadurch gekennzeichnet, dass Drehanschläge (43, 44) für das Schieberorgan (36) vorhanden sind, welche mindestens dessen Oeffnungsstellung festlegen.

11. Doppel-Austragkartusche nach Anspruch 7, dadurch gekennzeichnet, dass das Schieberorgan (36) mit Schlüsselflächen (46) versehen ist.

12. Doppel-Austragkartusche nach Anspruch 6, dadurch gekennzeichnet, dass der Mündungsteil (4) zum Anschluss eines Durchlaufmischers (16) ausgebildet ist.

13. Doppel-Austragkartusche nach Anspruch 7, dadurch gekennzeichnet, dass das Schieberorgan (36) zum Anschluss eines Durchlaufmischers (40) ausgebildet ist.

14. Doppel-Austragkartusche nach Anspruch 7, dadurch gekennzeichnet, dass die Längsbohrungen (34) der Ansätze (31) eingangsseitig durch einen mittels Zylinder-Innendruck zerstörbaren Verschluss geschlossen sind.

## Revendications

1. Cartouche double pour pâtes à deux composants, comportant deux cylindres d'alimentation (2, 20), disposés côte à côte, avec leurs axes parallèles, ainsi qu'un embout (4, 24) frontal, commun aux deux cylindres et reliant ceux-ci d'une seule pièce, qui contient deux canaux de distribution (6, 26) axiaux, partant chacun d'un volume de cylindre, caractérisée en ce que les deux canaux de distribution sont séparés par deux portions de paroi (8, 28) partant de parois de cylindre (3, 23) séparées et s'étendant en double jusqu'à l'extrémité du canal, et logent un élément de fermeture (10, 30) séparé, introduit axialement de l'extérieur.

2. Cartouche double selon la revendication 1, caractérisée en ce que les deux portions de paroi (8) sont reliées, à l'extrémité de canal, par une cloison (5) définissant un plan frontal (7) plan, de l'embout (4).

3. Cartouche double selon la revendication 1 ou 2, caractérisée en ce que les deux portions de paroi (28) sont reliées par des portions (25) d'un anneau (24) qui est formé sur les faces frontales des deux cylindres d'alimentation (20), et entoure les deux canaux de distribution.

4. Cartouche double selon la revendication 1, caractérisée en ce que les faces intérieures des portions de paroi (8, 28) sont cylindriques et prolongent chacune, en continu, les faces intérieures d'un cylindre d'alimentation (2, 20).

5. Cartouche double selon la revendication 1, caractérisée en ce que l'élément de fermeture (10, 30) comporte deux appendices (11, 31) adaptés chacun à la section transversale d'un canal de distribution (6, 26), reliés par une bride (12, 32).

6. Cartouche double selon la revendication 1 ou 5, caractérisée en ce que l'élément de fermeture (10) forme une fermeture devant être enlevée avant l'extraction des pâtes à deux composants, des canaux de distribution.

7. Cartouche double selon la revendication 5, caractérisée en ce que chaque appendice (31) présente un perçage longitudinal (34) traversant aussi la bride (32) et en ce que la face extérieure (33) de la bride forme une surface d'étanchéité destinée à coopérer avec un organe coulissant (36), guidé tournant sur l'embout (24).

8. Cartouche double selon la revendication 7, caractérisée en ce que l'organe coulissant (36) comprend deux perçages longitudinaux (37) et peut tourner au choix, dans une position d'ouverture ou dans une position de fermeture, dans lesquelles les perçages longitudinaux (37) communiquent avec les perçages (34) de l'élément de fermeture (30) ou sont décalés par rapport à ceux-ci.

9. Cartouche double selon la revendication 8, caractérisée en ce que l'embout (24) et l'organe coulissant (36) sont reliés par un filetage fin (39) et soumettent la bride (32) de l'élément de fermeture (30) à une pression axiale différente, en position de fermeture et en position d'ouverture.

10. Cartouche double selon la revendication 8, caractérisée en ce qu'on prévoit des butées de rotation (43, 44) pour l'organe coulissant (36), qui fixent au moins sa position d'ouverture.

11. Cartouche double selon la revendication 7, caractérisée en ce que l'organe coulissant (36) est pourvu de surfaces pour clés (46).

12. Cartouche double selon la revendication 6, caractérisée en ce que l'embout (4) est conçu pour permettre le raccordement d'un mélangeur continu (16).

13. Cartouche double selon la revendication 7, caractérisée en ce que l'organe coulissant (36) est conçu pour permettre le raccordement d'un mélangeur continu (40).

14. Cartouche double selon la revendication 7, caractérisée en ce que les perçages longitudinaux (34) des appendices (31) sont fermés, côté entrée, par une fermeture pouvant être détruite par une pression intérieure au cylindre.

## Claims

1. A double discharge cartridge for two-component materials, with two storage cylinders (2, 20), located on parallel axes next to one another, and with a nozzle portion (4, 24) at their frontal ends, common to both cylinders and connecting them integrally, said nozzle portion (4, 24) containing two axial discharge ducts (6, 26), each emerging from a cylinder space, characterised in that the two discharge ducts are separated by wall sections (8, 28) emerging from separate cylinder walls (3, 23) and extending in a double-walled fashion as far as the end of the ducts, said ducts receiving a separate closure portion (10, 30), which is inserted axially from the outside.

2. A double discharge cartridge according to Claim 1, characterised in that the two wall sections (8) are connected at the duct end by a planar fillet (5) defining a frontal plane surface (7) of the nozzle portion (4).

3. A double discharge cartridge according to Claim 1 or 2, characterised in that the two wall sections (28) are connected by sections (25) of a ring (24), which is moulded on to the frontal ends of both storage cylinders (20) and surrounds both discharge ducts.

4. A double discharge cartridge according to Claim 1, characterised in that the inner sides of the wall sections (8, 28) are cylindrical, and each continuously extends the inner surface of a storage cylinder (2, 20).

5. A double discharge cartridge according to Claim 1, characterised in that the closure portion (10, 30) has two stops (11, 31), each adapted to the cross-sectional size of a discharge duct (6, 26), and connected by a flange (12, 32).

6. A double discharge cartridge according to Claim 1 or 5, characterised in that the closure portion (10) forms a closure intended to be removed from the discharge ducts before discharge of the two-component materials.

7. A double discharge cartridge according to Claim 5, characterised in that each stop (31) has a longitudinal opening (34) which also penetrates the flange (32), and that the external surface (33) of the flange forms a sealing surface intended to cooperate with a slider member (36) rotarily mounted on the nozzle portion (24).

8. A double discharge cartridge according to Claim 7, characterised in that the slider member (36) contains two longitudinal openings (37), and is optionally rotatable into an open or a closed position, in which the said longitudinal openings (37) either communicate with those (34) of the closure portion (30), or are offset thereto.

9. A double discharge cartridge according to Claim 8, characterised in that the nozzle portion (24) and slider member (36) are connected by a fine thread (39), and exert a differing axial pressure on the flange (32) of the closure portion (30) in the closed and in the open positions.

10. A double discharge cartridge according to Claim 8, characterised in that rotary stops (43, 44) are provided for the slider member (36), said stops defining at least the open position of said slider member (36).

11. A double discharge cartridge according to Claim 7, characterised in that the slider member (36) is provided with key surfaces (46).

12. A double discharge cartridge according to Claim 6, characterised in that the nozzle portion (4) is designed for the connection of a continuous mixer (16).

13. A double discharge cartridge according to Claim 7, characterised in that the slider member (36) is designed for connection of a continuous mixer (40).

14. A double discharge cartridge according to Claim 7, characterised in that the longitudinal openings (34, of stops (31) are closed on the entry side by a closure which can be destroyed by means of the cylinder internal pressure.

FIG.3

FIG.2

FIG.1

FIG. 4

35  38
36
VI  V          V  VI
30          33
24          28
42
20          20
26  23  26

FIG. 5

37  36          42
30
34
20          20
44
37  43

FIG. 6

25  28
24          31
34
26          26
25

FIG. 7

40
41          38
37
VIII          VIII
36          32
46          39
20          20
31  34  34  31

FIG. 8

43  44
46          46
34
37
44  43

EP 0 261 466 B1